# FASCICULE DE BREVET EUROPEEN

(11) **EP 1 764 474 B1**
(45) Date de publication et mention de la délivrance du brevet: **06.02.2008**
(21) Numéro de dépôt: 06356110.4
(22) Date de dépôt: 18.09.2006
(51) Int. Cl.: E06B 9/72

(54) **Actionneur électrique**
Elektrische Betätigungsvorrichtung
Electric actuator

(30) Priorité: 19.09.2005 FR 0509541
(43) Date de publication de la demande: 21.03.2007
(73) Titulaire: Somfy SAS, 74300 Cluses (FR)
(72) Inventeur: Mercier, Patrick, 74970 Marignier (FR); Piguet, Sylvain, 21310 Fouchanges (FR); Zimmer, Jean-Luc, 74130 Mont Saxonnex (FR)
(74) Mandataire: Myon, Gérard Jean-Pierre

(56) Documents cités:
- EP-A- 0 716 214
- EP-A- 1 207 266
- WO-A-20/04015235
- FR-A- 2 743 602

## Description

La présente invention a trait à un actionneur électrique destiné à être inséré dans un tube d'enroulement pour la manoeuvre d'un écran de fermeture, de protection solaire, de projection ou analogue. L'invention a également trait à une installation de fermeture, de protection solaire ou de projection d'images comportant un tel actionneur.

Par écran de fermeture on entend les portes, portails, volets, et matériels équivalents. Par écran de projection, on entend les écrans sur lesquels peuvent être projetées des images animées ou fixes, notamment des images de films cinématographiques.

Il est connu de FR-A-2 743 602 et EP-A-0 716 214 de manoeuvrer un écran au moyen d'un actionneur électrique du type précité, comprenant un moteur, une enveloppe de protection du moteur et une console sur laquelle l'enveloppe vient se rapporter. La console est destinée à être fixée sur une structure supportant l'écran. L'alimentation électrique du moteur et d'éventuels organes de pilotage du moteur est assurée par le biais d'un câble multi-conducteur. Le câble relie l'intérieur de l'actionneur à l'extérieur en traversant la console par une ouverture pratiquée dans celle-ci. Cette ouverture est en général de forme et de section voisines de celles du câble pour assurer une certaine étanchéité.

Lors de la fabrication de l'actionneur, le câble est préparé préalablement. Il est coupé à la longueur de travail, son enveloppe isolante est éliminée en extrémité pour donner à ses conducteurs une certaine longueur libre puis l'extrémité de chaque conducteur est dénudée et munie d'une cosse. Le câble ainsi préparé est passé au travers de l'ouverture de la console et chacun des conducteurs est raccordé par l'intermédiaire de sa cosse à la cosse d'un organe lui correspondant, sur le moteur ou sur une platine d'alimentation du moteur.

Le passage du câble au travers d'une telle ouverture génère des inconvénients. En effet, la présence d'une cosse sur un conducteur augmente sa section. La section de l'ouverture dans la console devient alors insuffisante pour le passage du câble équipé de ses cosses. Il est nécessaire de procéder par passages individuels de chaque conducteur, ce qui augmente le temps de manipulation et oblige à augmenter la longueur libre de chaque conducteur. Cela augmente la longueur des conducteurs du câble d'une portion inutile pour l'utilisation future de l'actionneur et oblige à prévoir, à l'intérieur de l'actionneur, un volume de stockage de cette portion des conducteurs.

Il est aussi possible, lors de la préparation du câble de prévoir des parties libres de conducteurs de longueurs différentes de sorte que les cosses, une fois serties en extrémité de conducteur, se répartissent dans le sens axial du câble. Ceci permet un passage simultané des conducteurs équipés de leurs cosses au travers de l'ouverture de la console, mais nécessite une préparation compliquée du câble. Il faut en effet repérer chaque conducteur, puis le couper à bonne longueur. En outre, la longueur totale du câble s'en trouve également augmentée.

C'est à ces inconvénients qu'entend plus particulièrement remédier l'invention en proposant un actionneur électrique permettant une insertion facile du câble dans le passage de câble de sa console sans nécessiter de préparation spécifique du câble.

Dans cet esprit, l'invention concerne un actionneur électrique destiné à être inséré dans un tube d'enroulement pour la manoeuvre d'un écran de fermeture, de protection solaire, de projection ou analogue, comprenant un moteur dont l'arbre de sortie entraîne le tube d'enroulement, une enveloppe de protection du moteur et une console sur laquelle l'enveloppe vient se rapporter, cette console étant destinée à être fixée sur la structure de supportage de l'écran et comportant un passage de câble. Cet actionneur est caractérisé en ce que le passage de câble est défini par un logement ménagé dans la console et pourvu d'une ouverture, radiale par rapport à l'axe de rotation du tube d'enroulement et s'étendant axialement sur la longueur du passage de câble, cette ouverture étant obturée par un bouchon rapporté sur la console.

Grâce à l'invention, le câble d'alimentation du moteur peut facilement être disposé dans le passage de câble, à travers l'ouverture radiale et avant mise en place du bouchon, sans être gêné par les cosses qui peuvent équiper les extrémités de ses conducteurs.

Selon d'autres caractéristiques avantageuses de l'invention :
- le passage de câble est de section sensiblement égale à la section nominale du câble d'alimentation du moteur ;
- le bouchon s'emboîte sur la console dans le logement ;
- le bouchon est maintenu en place sur la console par l'enveloppe de protection du moteur s'emboîtant sur la console ;
- le bouchon est amené dans sa position d'obturation de l'ouverture radiale du logement et maintenu en place sur la console par le biais de glissières complémentaires ménagées sur la console et sur le bouchon. Dans ce cas, les glissières sont, de préférence, sensiblement parallèles à l'axe de rotation du tube d' enroulement ;
- le passage de câble, défini par l'emboîtement du bouchon sur la console au niveau du logement, comprend une chicane ;
- le passage de câble, défini par l'emboîtement du bouchon sur la console au niveau du logement, est bordé par au moins un jonc fermé. Ce jonc est avantageusement à section variable sur la circonférence du passage de câble ;
- la face du bouchon orientée du côté du passage de câble est inclinée par rapport à l'axe de rotation du tube d'enroulement et convergente vers l'axe, de l'extrémité orientée du côté de la structure vers l'extrémité orientée du côté de l'enveloppe lorsque le bouchon est monté sur la console, l'angle d'inclinaison de la face par rapport à l'axe étant, de préférence, compris entre 5 et 10 degrés.

L'invention concerne également une installation de fermeture, de protection solaire ou de projection d'images comprenant un actionneur tel que décrit ci-dessus. Une telle installation est plus facile à mettre en place et à entretenir que celles de l'état de la technique.

Les caractéristiques et avantages de l'invention apparaîtront dans la description qui va suivre de quatre modes de réalisation d'un actionneur électrique selon l'invention, donnée uniquement à titre d'exemple, et faite en se référant aux dessins annexés, dans lesquels :
- la figure 1 est une coupe axiale partielle d'une installation conforme à l'invention ;
- la figure 2 est une coupe de certains éléments constitutifs d'un actionneur électrique de l'installation de la figure 1 dans une première étape de montage ;
- la figure 3 est une coupe selon la ligne III-III à la figure 2 ;
- la figure 4 est une coupe analogue à la figure 2, les éléments étant dans une deuxième étape de montage ;

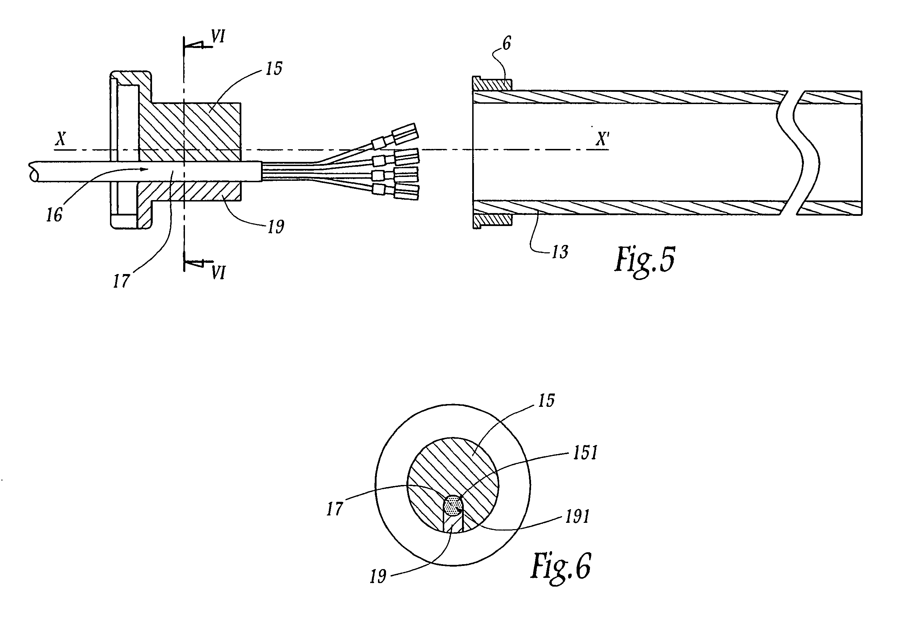

- la figure 5 est une coupe analogue à la figure 2, les éléments étant dans une troisième étape de montage ;
- la figure 6 est une coupe selon la ligne VI-VI à la figure 5 ;
- la figure 7 est une coupe analogue à la figure 2, les éléments étant dans une quatrième étape de montage ;
- la figure 8 est une coupe analogue à la figure 7 pour un actionneur conforme à un second mode de réalisation de l'invention ;
- la figure 9 est une coupe selon la ligne IX-IX à la figure 8, le câble étant non représenté pour une meilleure visibilité ;
- la figure 10 est une coupe analogue à la figure 8 et montre certains éléments de l'actionneur dans une étape antérieure de montage, le câble étant non représenté pour une meilleure visibilité ;
- la figure 11 est une coupe analogue à la figure 10 montrant un troisième mode de réalisation d'un actionneur électrique selon l'invention, le câble étant non représenté pour une meilleure visibilité ;
- la figure 12 est une coupe selon la ligne XII-XII à la figure 11 ;
- la figure 13 est une coupe analogue à la figure 11 montrant un quatrième mode de réalisation d'un actionneur électrique conforme à l'invention ;
- la figure 14 est une coupe partielle selon la ligne XIV-XIV à la figure 13 ;
- la figure 15 est une vue à plus grande échelle du détail XV à la figure 13.

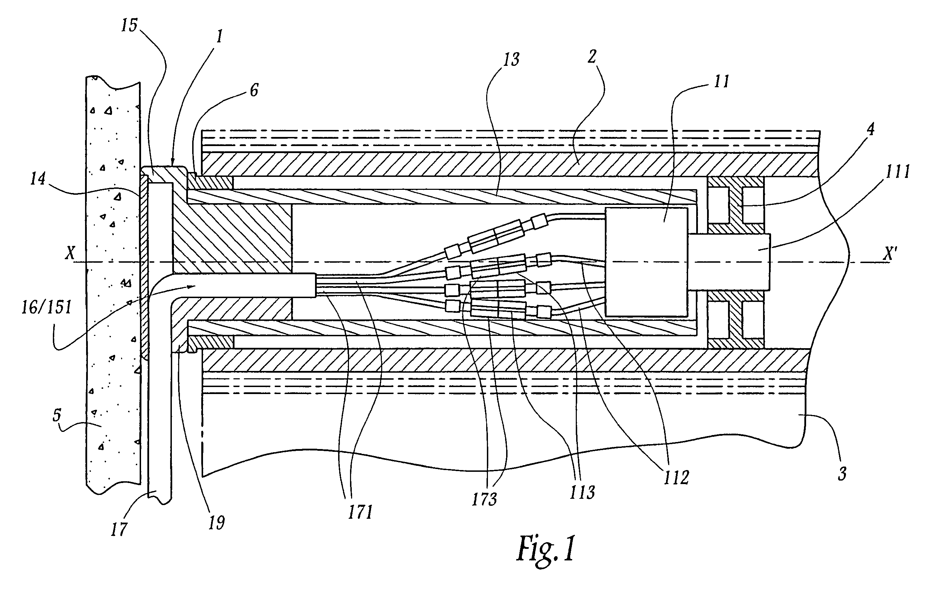

L'actionneur électrique 1 représenté à la figure 1 est inséré dans un tube 2, sur lequel vient s'enrouler un écran de fermeture 3. L'actionneur électrique 1 comprend un moteur 11 et, éventuellement, des organes de pilotage du moteur 11, non représentés sur les figures, et supportés par une platine de commande appartenant à l'actionneur et également non représentée. L'arbre de sortie 111 du moteur 11 entraîne en rotation une couronne 4, qui elle-même entraîne en rotation le tube d'enroulement 2. Ainsi, en fonction du sens de rotation du moteur 11, il est possible d'enrouler plus ou moins l'écran 3 sur le tube 2.

L'actionneur électrique comprend également une enveloppe tubulaire 13 de protection du moteur 11 et d'éventuels organes de pilotage du moteur, cette enveloppe étant rapportée sur une console 15 fixée à une structure 5 supportant l'écran 3. La structure 5 peut, par exemple, être un mur d'un bâtiment.

Une bague 6 est montée sur l'enveloppe tubulaire 13 au voisinage de son extrémité orientée vers la console 15. La bague 6 forme un palier pour la rotation du tube d'enroulement 2 autour de l'actionneur 1, l'actionneur 1 restant fixe lorsque le tube 2 tourne autour de son axe central X-X'.

La console 15 comporte un logement 151 en forme de gorge, pourvu d'une ouverture 152 radiale par rapport à l'axe X-X' et s'étendant en longueur selon cet axe. Un bouchon 19 est destiné à être rapporté sur la console 15, de façon à obturer l'ouverture 152. Le bouchon 19 comporte une gorge 191 complémentaire de la gorge 151 de la console 15, de sorte qu'un passage de câble 16 à section sensiblement circulaire est défini lorsque le bouchon 19 est en position d'obturation de l'ouverture 152. Les gorges 151 et 191 sont configurées de façon à ce que le passage 16 est de section sensiblement égale à la section nominale d'un câble 17 d'alimentation du moteur 11 et d'éventuels organes de pilotage du moteur.

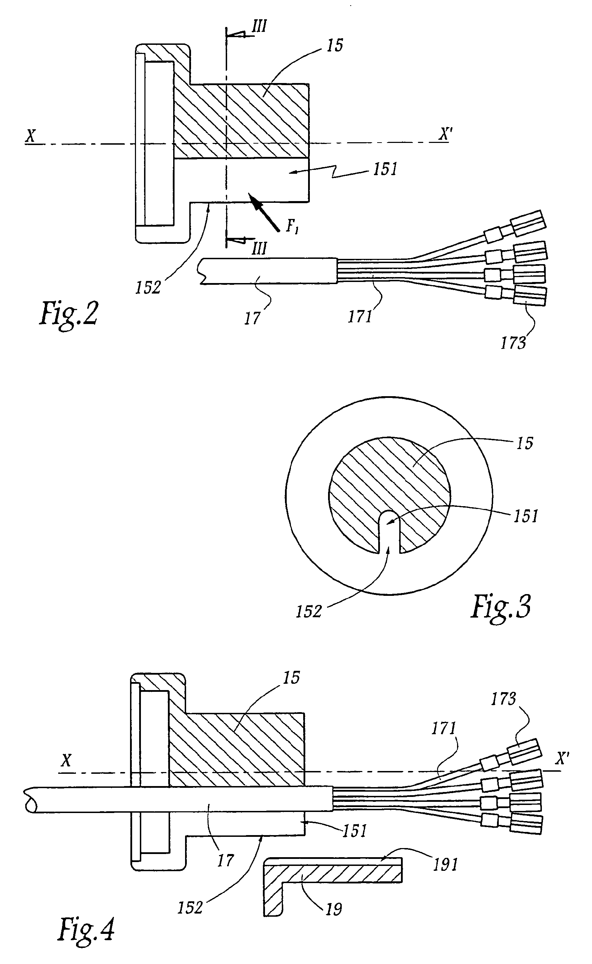

Le câble 17 est mis en place dans le logement 151 de la console 15 via l'ouverture 152 avant positionnement du bouchon 19, comme montré par la flèche F₁ à la figure 2. Puis le câble 17 est bloqué dans le passage de câble 16 par mise en place du bouchon 19 dans sa position d'obturation de l'ouverture 152 et d'une plaque 14 d'obturation dorsale de la console 15 destinée à être fixée sur la structure 5. Ainsi, la présence des cosses 173 sur les conducteurs 171 constituant le câble 17 n'est pas gênante pour la mise en place du câble 17 dans le passage 16. Chaque conducteur 171 est ensuite raccordé via sa cosse 173 à la cosse de l'organe lui correspondant, à savoir le moteur 11 ou un organe de pilotage du moteur. Dans l'exemple représenté, chaque cosse 173 est raccordée à une cosse terminale 113 d'un conducteur 112 d'alimentation du moteur 11.

La mise en place du bouchon 19 sur la console 15 est réalisée par emboîtement mutuel de ces deux éléments. Par ailleurs, le bouchon 19 est maintenu en place sur la console 15 par l'enveloppe 13 de protection du moteur 11 s'emboîtant sur la console et coiffant à la fois la console 15 et le bouchon 19.

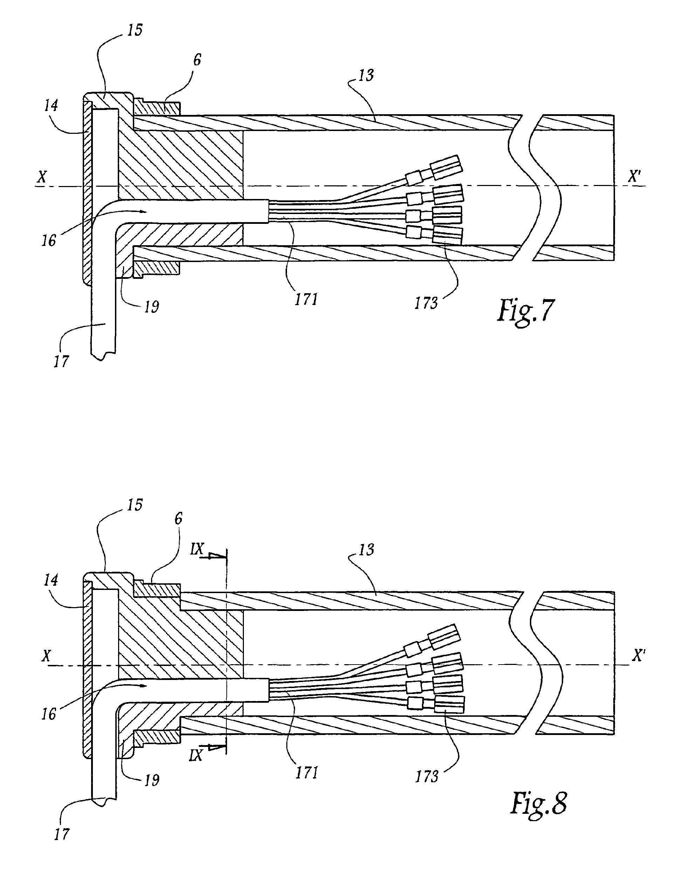

Dans le deuxième mode de réalisation représenté aux figures 8 à 10, les éléments analogues à ceux du premier mode de réalisation portent des références identiques. Comme précédemment, la console 15 de l'actionneur 1 est pourvue d'un logement 151 en forme de gorge dont l'ouverture 152, radiale par rapport à l'axe d'enroulement X-X', facilite la mise en place du câble 17.

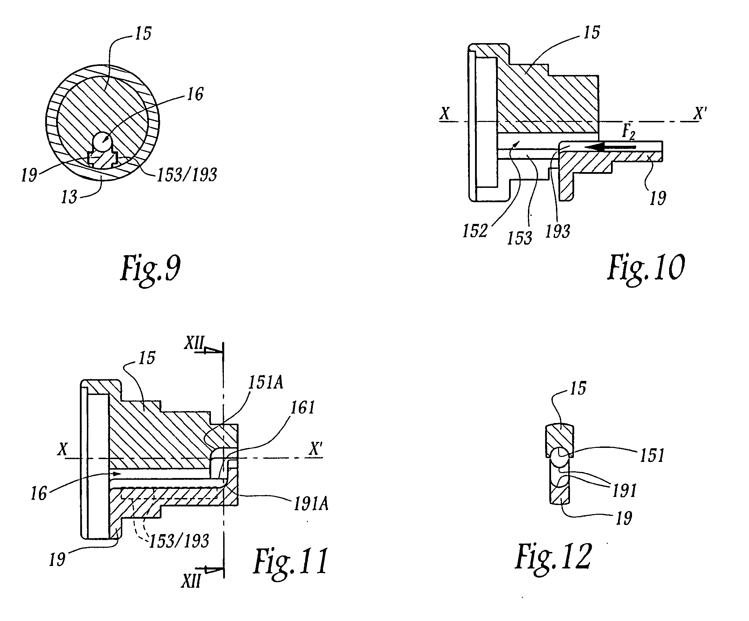

La console 15 comporte également des glissières 153 complémentaires de glissières ou rainures 193 ménagées sur le bouchon 19. Les glissières 153 et 193 sont ménagées dans une direction sensiblement parallèle à l'axe X-X'. Le bouchon 19 est amené dans sa position d'obturation de l'ouverture 152 par glissement axial relatif des glissières 153 et 193 parallèlement à l'axe X-X', comme montré par la flèche F₂ à la figure 10. Le bouchon 19 est maintenu en place sur la console 15 grâce aux glissières 153 et 193. De cette façon, le câble 17, non représenté sur les figures 9 et 10, est tenu avec sûreté dans le passage de câble 16 avant même que l'enveloppe 13 ne soit montée sur la console 15. Dans ce mode de réalisation, la bague 6 formant palier pour la rotation du tube d'enroulement 2 est montée directement sur la console 15 et coiffe la console 15 et le bouchon 19, comme montré à la figure 8.

Dans le troisième mode de réalisation représenté aux figures 11 et 12, les éléments analogues à ceux du deuxième mode de réalisation portent des références identiques. La console 15 de l'actionneur 1 est pourvue d'un logement 151 en forme de gorge dont l'ouverture radiale facilite la mise en place du câble 17. Des glissières axiales 153 et 193 sont ménagées respectivement sur la console 15 et le bouchon 19 pour la mise en place et le maintien du bouchon 19 dans sa position d'obturation de l'ouverture radiale.

En outre, les logements 151 de la console 15 et 191 du bouchon 19 présentent respectivement des coudes 151A et 191A complémentaires. Ces coudes sont conformés de façon à ce que l'emboîtement mutuel de la console 15 et du bouchon 19 définisse une chicane 161 dans le passage de câble 16. Ce mode de réalisation assure également une fonction de serre-câble.

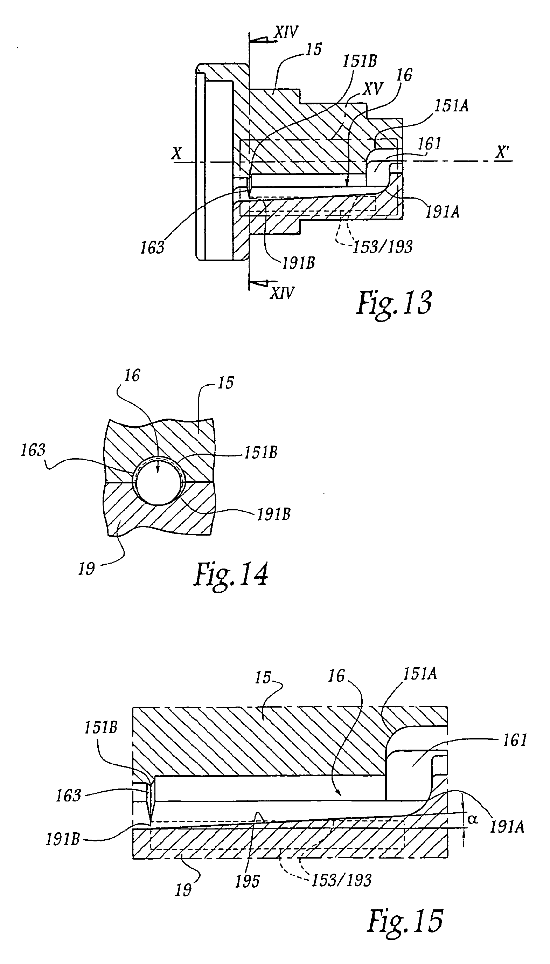

Dans le quatrième mode de réalisation représenté aux figures 13 à 15, les éléments analogues à ceux du troisième mode de réalisation portent des références identiques. La console 15 de l'actionneur 1 est pourvue d'un logement 151 en forme de gorge dont l'ouverture radiale facilite la mise en place du câble 17. Des glissières axiales 153 et 193 sont ménagées respectivement sur la console 15 et le bouchon 19 pour la mise en place et le maintien du bouchon 19 dans sa position d'obturation de l'ouverture 152. Les gorges 151 de la console 15 et 191 du bouchon 19 comportent également des coudes complémentaires 151A et 191A définissant une chicane 161.

De plus, les gorges 151 et 191 présentent sur leurs faces orientées du côté du passage de câble 16, au moins une rainure en saillie 151B et 191B, de manière à former au moins un jonc fermé 163 lorsque le bouchon est en place au niveau du logement 151. Un tel jonc 163 permet de garantir l'étanchéité du passage de câble 16.

Les rainures 151B et 191B peuvent être d'épaisseur radiale constante, de manière à former un jonc de section régulière. Comme montré à la figure 14, la rainure 151B peut être d'épaisseur radiale constante, tandis que la rainure 191B est d'épaisseur radiale décroissante des bords supérieurs de la gorge 191 vers le fond de la gorge 191.

De plus, pour faciliter le montage du bouchon 19 sur la console 15, la face du bouchon 195 orientée du côté du passage de câble 16 a une pente, par rapport à l'axe X-X', ascendante, c'est-à-dire convergente vers l'axe X-X', de son extrémité orientée du côté de la structure 5 vers son extrémité orientée du côté de l'enveloppe 13 lorsque le bouchon 19 est monté sur la console 15. Cette configuration améliore la tenue à l'arrachement du câble par un effet d'auto-serrage. En effet, un effort de traction appliqué sur le câble 17, non représenté sur les figures 13 à 15, a un effet d'entraînement sur le bouchon 19 vers la console 15, ce qui augmente le maintien du câble dans le passage de câble 16. Un autre avantage de cette configuration est de permettre l'utilisation de câbles de diamètre variable sans altérer les qualités de tenue à l'arrachement.

En pratique, l'angle α d'inclinaison entre la face 195 et l'axe X-X' est compris entre 5 et 10°, de préférence de l'ordre de 7°.

Les glissières 153-193, les coudes 151A-191A, et les rainures 151B-191B permettent la mise en place du bouchon 19 sur la console 15, le serrage du câble 17 dans le passage de câble 16, et l'étanchéité du passage de câble 16. Ces moyens sont utilisables conjointement, comme dans le dernier mode de réalisation décrit, ou indépendamment les uns des autres.

Les glissières 153 et 193 permettent d'envisager, pour les modes de réalisation des figures 11 à 15, un montage tel que représenté à la figure 8. En outre, un montage du type de celui de la figure 7 est possible avec les bouchons et les consoles pourvus de glissières des deuxième, troisième et quatrième modes de réalisation.

Quel que soit le mode de réalisation envisagé, le passage de câble 16 créé par la coopération des éléments 15 et 19 a avantageusement une section sensiblement égale à la section nominale du câble prévu pour alimenter le moteur de l'actionneur. Ce câble est ainsi fermement maintenu en position et une relative étanchéité peut être obtenue.

## Revendications

1. Actionneur électrique (1) destiné à être inséré dans un tube d'enroulement (2) pour la manoeuvre d'un écran (3) de fermeture, de protection solaire, de projection ou analogue, comprenant :
- un moteur (11) dont l'arbre de sortie (111) entraîne ledit tube d'enroulement (2),
- une enveloppe (13) de protection dudit moteur et
- une console (15) sur laquelle ladite enveloppe vient se rapporter, destinée à être fixée sur une structure (5) supportant l'écran et comportant un passage de câble (16),
**caractérisé en ce que** ledit passage de câble est défini par un logement (151) ménagé dans la console et pourvu d'une ouverture (152), radiale par rapport à l'axe (X-X') de rotation du tube d'enroulement et s'étendant axialement sur la longueur dudit passage de câble, ladite ouverture étant obturée par un bouchon (19) rapporté sur la console.

2. Actionneur électrique selon la revendication 1, **caractérisé en ce que** ledit passage de câble (16) est de section sensiblement égale à la section nominale d'un câble (17) d'alimentation du moteur (11).

3. Actionneur électrique selon l'une quelconque des revendications 1 ou 2, **caractérisé en ce que** le bouchon (19) s'emboîte sur la console (15) dans le logement (151).

4. Actionneur électrique selon la revendication 3, **caractérisé en ce que** le bouchon (19) est maintenu en place sur la console (15) par l'enveloppe (13) de protection du moteur (11) s'emboîtant sur la console.

5. Actionneur électrique selon l'une quelconque des revendications 3 ou 4, **caractérisé en ce que** le bouchon (19) est amené dans sa position d'obturation de l'ouverture radiale (152) du logement (151) et maintenu en place sur la console (15) par le biais de glissières (153, 193) complémentaires ménagées sur la console et sur le bouchon.

6. Actionneur électrique selon la revendication 5, **caractérisé en ce que** lesdites glissières (153, 193) sont sensiblement parallèles à l'axe (X-X') de rotation du tube d'enroulement (2).

7. Actionneur électrique selon l'une quelconque des revendications 3 à 6, **caractérisé en ce que** le passage de câble (16) défini par l'emboîtement du bouchon (19) sur la console (15) au niveau du logement (151) comprend une chicane (161).

8. Actionneur électrique selon l'une quelconque des revendications 3 à 7, **caractérisé en ce que** le passage de câble (16) défini par l'emboîtement du bouchon (19) sur la console (15) au niveau du logement (151) est bordé par au moins un jonc fermé (163).

9. Actionneur électrique selon la revendication 8, **caractérisé en ce que** ledit jonc (163) est à section variable sur la circonférence dudit passage de câble (16).

10. Actionneur électrique selon l'une quelconque des revendications 1 à 9, **caractérisé en ce que** la face (195) du bouchon (19) orientée du côté du passage de câble (16) est inclinée par rapport à l'axe (X-X') de rotation du tube d'enroulement (2) et convergente vers ledit axe, de l'extrémité orientée du côté de la structure (5) vers l'extrémité orientée du côté de l'enveloppe (13) lorsque le bouchon est monté sur la console (15), l'angle d'inclinaison (α) de ladite face par rapport audit axe étant, de préférence, compris entre 5 et 10 degrés.

11. Installation de fermeture, de protection solaire ou de projection d'images **caractérisée en ce qu'**elle comprend au moins un actionneur (1) selon l'une des revendications précédentes.

## Claims

1. Electric actuator (1) designed to be inserted in a winding tube (2) for operation of a closure, solar protection, projection or similar screen (3), comprising:
- a motor (11), the output shaft (111) of which drives said winding tube (2),
- a protective shroud (13) for said motor and
- a console (15) to which said shroud is joined, designed to be fixed to a structure (5) supporting the screen and containing a cable raceway (16),
**characterised in that** said cable raceway is defined by a housing (151) arranged in the console and provided with an opening (152) which is radial in relation to the axis (X-X') of rotation of the winding tube and extends axially over the length of said cable raceway, said opening being sealed by a plug (19) joined to the console.

2. Electric actuator according to claim 1, **characterised in that** said cable raceway (16) is approximately equal in section to the nominal section of a feeder cable (17) for the motor (11).

3. Electric actuator according to either of claims 1 or 2, **characterised in that** the plug (19) fits onto the console (15) in the housing (151).

4. Electric actuator according to claim 3, **characterised in that** the plug (19) is held in place on the console (15) by the protective shroud (13) for the motor (11) fitting onto the console.

5. Electric actuator according to either of claims 3 or 4, **characterised in that** the plug (19) is moved into its position for sealing of the radial opening (152) of the housing (151) and held in place on the console (15) by means of complementary slide rails (153, 193) arranged on the console and the plug.

6. Electric actuator according to claim 5, **characterised in that** said slide rails (153, 193) are approximately parallel to the axis (X-X') of rotation of the winding tube (2).

7. Electric actuator according to any of claims 3 to 6, **characterised in that** the cable raceway (16) defined by the fit of the plug (19) on the console (15) at the housing (151) includes a baffle (161).

8. Electric actuator according to any of claims 3 to 7, **characterised in that** the cable raceway (16) defined by the fit of the plug (19) on the console (15) at the housing (151) is edged by at least one circlip (163).

9. Electric actuator according to claim 8, **characterised in that** said circlip (163) is variable in section on the circumference of said cable raceway (16).

10. Electric actuator according to any of claims 1 to 9, **characterised in that** the face (195) of the plug (19) oriented on the side of the cable raceway (16) is tilted in relation to the axis (X-X') of rotation of the winding tube (2) and is convergent towards said axis from the end oriented on the side of the structure (5) towards the end oriented on the side of the shroud (13) when the plug is mounted on the console (15), the tilt angle (α) of said face in relation to said axis being preferably between 5 and 10 degrees.

11. Closure, solar protection or image projection installation **characterised in that** it contains at least one actuator (1) according to any of the previous claims.

## Patentansprüche

1. Elektrische Betätigungsvorrichtung (1), die vorgesehen ist, in ein Aufwickelrohr (2) für die Handhabung eines Verschließschirms (3), eines Sonnenschutzschirms, eines Projektionsschirms oder dergleichen eingesetzt zu,werden, umfassend:
- einen Motor (11), dessen Abtriebswelle (111) das Aufwickelrohr (2) antreibt,
- eine Schutzhülle (13) für den Motor und
- einen Träger (15), auf dem die Hülle sich abstützt, und der vorgesehen ist, an einem Aufbau (5) befestigt zu werden, der den Schirm trägt und einen Kabelkanal (16) enthält,
**dadurch gekennzeichnet, dass** der Kabelkanal durch eine Aufnahme (151) definiert ist, die in den Träger eingearbeitet ist und mit einer Öffnung (152) versehen ist, die in Bezug auf die Rotationsachse (X-X') des Aufwickelrohrs radial angeordnet ist und sich axial über die Länge des Kabelkanals erstreckt, wobei die Öffnung durch einen Stopfen (19) verschließbar ist, der in die Träger eingesetzt ist.

2. Elektrische Betätigungsvorrichtung nach Anspruch 1, **dadurch gekennzeichnet, dass** der Kabelkanal (16) einen Querschnitt aufweist, der im Wesentlichen gleich dem Nominalquerschnitt eines Kabels (17) zur Versorgung des Motors (11) ist.

3. Elektrische Betätigungsvorrichtung nach einem beliebigen der Ansprüche 1 oder 2, **dadurch gekennzeichnet, dass** der Stopfen (19) an dem Träger (15) in die Aufnahme (151) eingreift.

4. Elektrische Betätigungsvorrichtung nach Anspruch 3, **dadurch gekennzeichnet, dass** der Stopfen (19) an dem Träger (15) durch die Schutzhülle (13) des Motors (11) in Stellung gehalten wird, die sich auf dem Träger einfügt.

5. Elektrische Betätigungsvorrichtung nach einem beliebigen der Ansprüche 3 oder 4, **dadurch gekennzeichnet, dass** der Stopfen (19) durch die Schräge von komplementären Gleitschienen (153, 193), die in dem Träger und dem Stopfen eingearbeitet sind, in seine Stellung zum Verschließen der radialen Öffnung (152) der Aufnahme (151) gebracht und an dem Träger (15) in Stellung gehalten wird.

6. Elektrische Betätigungsvorrichtung nach Anspruch 5, **dadurch gekennzeichnet, dass** die Gleitschienen (153, 193) im Wesentlichen parallel zur Rotationsachse (X-X') des Aufwickelrohres (2) angeordnet sind.

7. Elektrische Betätigungsvorrichtung nach einem beliebigen der Ansprüche 3 bis 6, **dadurch gekennzeichnet, dass** der durch den Eingriff des Stopfens (19) an dem Träger (15) in die Aufnahme (151) definierte Kabelkanal (16) eine Ablenkung (161) umfasst.

8. Elektrische Betätigungsvorrichtung nach einem beliebigen der Ansprüche 3 bis 7, **dadurch gekennzeichnet, dass** der durch den Eingriff des Stopfens (19) an dem Träger (15) in die Aufnahme (151) definierte Kabelkanal (16) durch mindestens einen geschlossenen Ring (163) eingefasst wird.

9. Elektrische Betätigungsvorrichtung nach Anspruch 8, **dadurch gekennzeichnet, dass** der Ring (163) über den Umfang des Kabelkanals (16) einen veränderlichen Querschnitt aufweist.

10. Elektrische Betätigungsvorrichtung nach einem der Ansprüche 1 bis 9, **dadurch gekennzeichnet, dass** die zu dem Kabelkanal (16) gerichtete Fläche (195) des Stopfens (19) in Bezug auf die Rotationsachse (X-X') des Aufwickelrohrs (2) geneigt ist und zu dieser Achse von dem zu der Seite des Aufbaus (5) gerichteten Ende zu dem zu der Seite der Hülle (13) gerichteten Ende hin, wenn der Stopfen an dem Träger (15) montiert ist, konvergiert, wobei der Neigungswinkel (α) der Fläche in Bezug auf die Achse vorzugsweise zwischen 5 und 10 Grad liegt.

11. Verschließ-, Sonnenschutz- oder Bildprojektionsanlage, **dadurch gekennzeichnet, dass** sie mindestens eine Betätigungsvorrichtung (1) nach einem der vorhergehenden Ansprüche umfasst.
